# EUROPÄISCHE PATENTSCHRIFT

(11) **EP 1 043 600 B1**
(45) Veröffentlichungstag und Bekanntmachung des Hinweises auf die Patenterteilung: **26.11.2003**
(21) Anmeldenummer: 00105755.3
(22) Anmeldetag: 17.03.2000
(51) Int. Cl.: G01S 5/14, G01C 21/30

(54) **Verfahren und Vorrichtung zur Bestimmung der Position eines Fahrzeugs**
Method and apparatus for determining the position of a vehicle
Procédé et dispositif pour la détermination de la position d'une voiture

(30) Priorität: 03.04.1999 DE 19915212
(43) Veröffentlichungstag der Anmeldung: 11.10.2000
(73) Patentinhaber: ROBERT BOSCH GMBH, 70442 Stuttgart (DE)
(72) Erfinder: Honkomp, Dieter, 31134 Hildesheim (DE); Tanneberger, Volkmar, 31139 Hildesheim (DE); Kreft, Peter, 30966 Hemmingen (DE); Noetzel, Guenter, 31199 Diekholzen (DE)

(56) Entgegenhaltungen:
- EP-A- 0 393 935
- EP-A- 0 840 138
- DE-A- 4 332 945
- DE-A- 4 415 993
- US-A- 5 155 688

## Beschreibung

Derartige Verfahren bzw. Vorrichtungen werden insbesondere in Verkehrstelematikgeräten und Navigationsgeräten von Kraftfahrzeugen verwendet. Hierfür werden insbesondere Ortungsempfänger für das NAVSTAR Global Positioning System (GPS) oder das Global Navigation Satellite System (GNSS, GLONASS) verwendet, die durch Laufzeitmessungen zu den Satelliten eine dreidimensionale Positionsbestimmung ermöglichen. Die Verfügbarkeit und Positionsgenauigkeit von derartigen Satellitensignal-Empfangseinrichtungen läßt sich durch Einbeziehung zusätzlicher Sensoren, wie zum Beispiel Drehraten-, Beschleunigungs- und Geschwindigkeitssensoren deutlich erhöhen, wenn die von diesen Sensoren gelieferten Informationen über zurückgelegte Wegstrecken und Fahrtrichtungen mit den aufeinanderfolgenden Positionssignalen der Navigationssatelliten verglichen werden. Hierzu werden im allgemeinen die jeweiligen Sensorsignale und das Positionssignal der Empfangsantenne von einer Recheneinrichtung aufgenommen, eine Relativposition in einem vorgegebenen Referenzsystem, zum Beispiel einer digitalen Karte, ermittelt, aus einem Vergleich der ermittelten Position in der Karte und einem eingegebenen Zielort eine Route berechnet und anschließend eine Fahrempfehlung an den Fahrer des Kraftfahrzeugs, zum Beispiel über ein Display, ausgegeben. Bei der Bestimmung der Relativposition in der Karte können systematische Abweichungen der Sensorsignale erkannt und entsprechende Korrekturdaten ermittelt werden, um diese systematischen Fehler in den Sensorsignalen bei der Berechnung der Relativposition in dem Bezugssystem zu korrigieren.

Aus der EP 393935 A2 ist ein Fahrzeugortungssystem bekannt, bei dem eine Fahrzeugposition mittels Sensoren und mittels einer Satellitenortung bestimmt wird. Die über die Sensoren bestimmte Position wird mit Kartendaten abgeglichen. Die Größe des möglichen Aufenthaltsgebiets bestimmt sich dabei aus der Abweichung zwischen der gemessenen Position und der über die Kartendaten bestimmten Position. Die möglichen, über die Sensoren bestimmten Aufenthaltsgebiete werden mit einem über eine Satellitenortung bestimmten Aufenthaltsgebiet abgeglichen, um eine möglichst genaue Positionsbestimmung zu erreichen.

Aus der US 5,155,688 ist eine Positionsbestimmung mittels Map-Matching bekannt, bei der eine Position sowohl über Sensoren als auch über Satellitenortung bestimmt und mit Kartendaten verglichen wird. Eine dabei bestimmte Fahrzeugposition wird als Ausgang für eine mittels Sensoren bestimmte Ortung verwendet, da eine absolute Positionsbestimmung über Entfernungs- und Richtungssensoren nicht möglich ist.

Problematisch an einem derartigen System ist insbesondere, daß bei der fortschreitenden technologischen Entwicklung insbesondere der Empfangsantennen und Fahrzustandssensoren grundsätzlich die gesamte Recheneinrichtung ersetzt werden muß, wodurch eine Anpassung derartiger Systeme an technologische Änderungen und Verbesserungen wegen der hohen Umrüstkosten erschwert ist.

Der Erfindung liegt die Aufgabe zugrunde, ein.Verfahren und eine Vorrichtung der eingangs genannten Art dahingehend zu verbessern, daß eine Anpassung eines Navigationssystems an geänderte technische Anforderungen erleichtert wird.

Diese Aufgabe wird bei einem Verfahren zur Bestimmung der Position eines Fahrzeugs gelöst, indem
- von einer Empfangsantenne ausgegebene Positionssignale und von Fahrzustandssensoren des Fahrzeugs ausgegebene Fahrzustandsgrößen zur Ermittlung einer Absolutposition des Fahrzeugs verwendet werden und ein Absolutpositionssignal ausgegeben wird,
- aus dem Absolutpositionssignal und vorgegebenen Referenzdaten eines Referenzsystems eine relative Position des Fahrzeugs in dem Referenzsystem ermittelt wird, ein Positionsgütesignal aus einem Vergleich des Absolutpositionssignals und eines Referenzpositionssignals ermittelt wird, und
- das Positionsgütesignal wiederum zur Bestimmung der Absolutposition des Fahrzeugs verwendet wird.

Bei einer erfindungsgemäßen Vorrichtung zur Bestimmung der Position eines Fahrzeugs wird diese Aufgabe gelöst mit
- einer Ortungseinrichtung zur Bestimmung einer Absolutposition des Fahrzeugs, die Fahrzustandssignale des Fahrzeugs von Fahrzeugsensoren und Positionssignale von einer Empfangsantenne aufnimmt, eine Absolutposition des Fahrzeugs bestimmt und als Absolutpositionssignal zur Verfügung stellt, wobei die Absolutposition durch Einbeziehung eines Positionsgütesignals korrigierbar ist, und
- einer Navigationseinrichtung, die das Absolutpositionssignal und zumindest einige der Fahrzustandssignale von der Ortungseinrichtung aufnimmt, ein Relativpositionssignal zur Festlegung der Fahrzeugposition in einem Referenzsystem bestimmt und das Positionsgütesignal aus einer Abweichung oder Streuung des Absolutpositionssignals von dem Relativpositionssignal ermittelt und der Ortungseinrichtung zur Verfügung stellt.

Erfindungsgemäß wird somit ein Ortungsverfahren zur Bestimmung einer Absolutposition des Fahrzeugs von einem nachfolgenden Navigationsverfahren zur Bestimmung der Relativposition des Fahrzeugs in einem Referenzsystem getrennt. Durch diese Trennung in zwei separate Verfahren können für das Ortungsverfahren somit verschiedene Algorithmen und Sensoren bzw. Empfangsantennen eingesetzt werden, ohne daß das nachfolgende Navigationsverfahren an die unterschiedlichen Ortungsverfahren jeweils angepaßt werden muß, wie es bei vernetzten Verfahren der Fall ist. Es muß lediglich die Übertragung eines standartisierten Absolutpositionssignals und eines standartisierten Positionsgütesignals sichergestellt werden, die von den speziellen Sensoren und Empfangsantennen unabhängig sind. Die zwei separaten Verfahren können somit durch standartisierte Signalübertragungen miteinander gekoppelt werden.

Die erfindungsgemäße Vorrichtung ist entsprechend in zwei separate Einrichtungen, eine Ortungseinrichtung zur Bestimmung der Absolutposition und eine Navigationseinrichtung zur Bestimmung der Relativposition und Ermittlung eines Positionsgütesignals unterteilt. Diese Einrichtungen können somit separat ausgetauscht werden, ohne daß die verbleibende Einrichtung an die jeweils neu eingesetzte Einrichtung angepaßt werden muß. Wenn somit neue Sensoren oder Empfangsantennen zur Verfügung stehen, die neuartige oder genauere Signale ausgeben, muß nicht mehr eine komplette Recheneinrichtung zur Bestimmung der Relativposition des Fahrzeugs in einem Referenzsystem ausgetauscht werden, sondern es kann die Ortungseinrichtung separat ersetzt werden. Weiterhin kann die Ortungseinrichtung bei einer Weiterentwicklung der Hardware oder der in ihr verwendeten Rechenalgorithmen separat ersetzt werden.

Das Positionsgütesignal kann beispielsweise aus einer Differenz der Absolutpositionen und Relativpositionen oder einer in der Navigationseinrichtung ermittelten Korrelation der Signale bestimmt werden.

Weiterhin können von der Ortungseinrichtung an die Navigationseinrichtung weitere Fahrzustandssignale sowie ein Qualitätssignal weitergegeben werden, das die bereits in der Ortungseinrichtung ermittelten Varianzen bei der Bestimmung der Absolutposition wiedergeben kann.

In der Ortungseinrichtung können dabei Algorithmen verwendet werden, mit denen systematische Abweichungen der Sensorsignale durch die langzeitstabileren Positionssignale der Empfangsantenne kalibriert werden. In diese Kalibrierung kann insbesondere direkt das Positionsgütesignal der Navigationseinrichtung einbezogen werden. Weiterhin ist eine Einbeziehung von Differenz-Korrekturdaten in diese Kalibrierung bzw. Korrektur innerhalb der Ortungseinrichtung möglich.

Die Ortungseinrichtung und die Navigationseinrichtung können vorteilhafterweise jeweils als integrierte Schaltungen hergestellt werden, wobei die Ortungseinrichtung beispielsweise auch in die Empfangsantenne integriert werden kann.

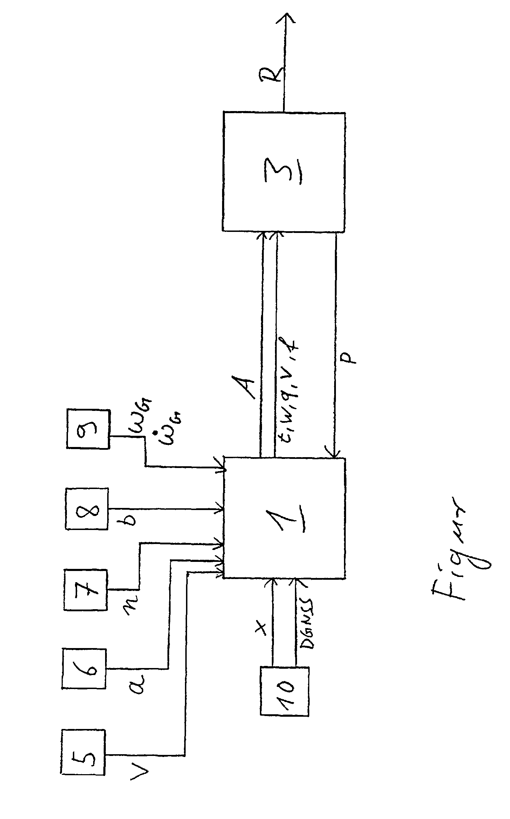

Die Erfindung wird im folgenden anhand der beiliegenden Zeichnung an einigen Ausführungsformen näher erläutert. Die Figur zeigt ein Blockschaltbild eines Navigationssystems und der hierfür verwendeten Signale.

Gemäß der Figur ist eine Ortungseinrichtung 1 vorgesehen, die von einer Empfangsantenne 10 ein Positionssignal x und von den Sensoren 5 bis 9 Fahrzustandssignale in Abhängigkeit von dem Fahrzustand des Fahrzeugs empfängt. Diese Sensoren sind beispielsweise ein an der Abtriebswelle des Getriebes angeordneter Geschwindigkeitsmesser 5, der ein Geschwindigkeitssignal v liefert, ein Längsbeschleunigungssensor 6, der zum Beispiel auch für die Auslösung eines Airbags und/oder einer Fahrdynamikregelung verwendet wird und ein Längsbeschleunigungssignal a liefert, Radsensoren 7, die Raddrehzahlen n der vier Räder liefern, die beispielsweise auch für ein Antiblockiersystem, eine elektronische Differentialsperre oder eine Fahrdynamikregelung verwendet werden, ein Querbeschleunigungssensor 8, der zum Beispiel ebenfalls für eine Fahrdynamikregelung verwendbar ist und ein Querbeschleunigungssignal b liefert, und ein Gierraten- bzw. Gierwinkelbeschleunigungssensor 9, der ein Gierratensignal ω_{G} und/oder ein Gierwinkelbeschleunigungssignal ω̇_{G} liefert. Anstelle der gezeigten Sensoren oder zusätzlich zu diesen Sensoren können noch weitere Sensoren für die Bestimmung des Fahrzustandes des Fahrzeugs herangezogen werden. Weiterhin ist auch die Aufnahme von Signalen aus einer Steuereinrichtung einer Fahrdynamikregelung möglich, die aus den jeweiligen Sensorsignalen berechnete Signale, wie zum Beispiel eine aus den Raddrehzahlen oder Räder bestimmte Fahrzeuggeschwindigkeit liefert. Die Ortungseinrichtung 1 kann insbesondere eine genormte Schnittstelle für einen fahrzeuginternen Datenbus aufweisen und die Sensorsignale direkt über diesen Datenbus empfangen. Weiterhin kann von der Empfangsantenne 10 ein Differenzkorrektursignal (DGNSS) zur Steigerung der Genauigkeit des Positionssignals x empfangen werden.

Die Ortungseinrichtung 1 weist eine Recheneinrichtung auf, in der die Sensorsignale, das Positionssignal x und gegebenenfalls das Differenz-Korrektursignal DGNSS aufgenommen werden und eine Absolutposition ermittelt wird. Für diese Absolutposition wird insbesondere das Positionssignal x herangezogen, das zwar keine sehr genaue Bestimmung der Absolutposition liefert, jedoch eine hohe Langzeitstabilität aufweist. Die genaue Bestimmung der Absolutposition wird z.B. durch Heranziehung der Fahrzustandssignale und der Berechnung einer theoretischen Änderung einer Absolutposition durch zeitliche Integration der Fahrzeuggeschwindigkeit sowie unter Berücksichtigung der Richtung bzw. Änderungen der Richtung ermittelt, die aus der Gierrate, Gierwinkelbeschleunigung oder Querbeschleunigung bestimmt werden. Für die Bestimmung der Absolutposition können insbesondere Rechenalgorithmen mit adaptiven Filtern verwendet werden, die an die jeweiligen Signale angepaßt sind. Eine so bestimmte Absolutposition wird als Absolutpositionssignal A über eine genormte Schnittstelle an eine nachfolgende Navigationseinrichtung 3 weitergegeben. Über die Schnittstelle können weiterhin die Uhrzeit t, die aktuelle Geschwindigkeit vₜ, die aktuelle Fahrtrichtung fₜ, die seit dem Start des Systems zurückgelegte Wegstrecke wₜ sowie gegebenenfalls noch weitere aktuelle Signale weitergegeben werden. Die Absolutposition kann dabei in bekannter Weise auf einen Referenz-Ellipsoiden, zum Beispiel WGS84, bezogen sein. Weiterhin kann ein Qualitätssignal q bzw. ein Integritätssignal bereitgestellt werden, das zum Beispiel auf den bei der Bestimmung der Absolutposition im adaptiven Filter ermittelten Varianzen oder aus einer Statusinformation beruhen kann.

In der Navigationseinrichtung werden diese Daten, insbesondere die Absolutposition A, mit den Daten einer als Referenzsystem dienenden digitalen Karte korreliert und eine Map Matching Position bzw. Relativposition ermittelt. Hierbei werden die übermittelten Absolutpositionssignale mit vorgespeicherten Referenzsignalen, die mit sehr hoher Genauigkeit bekannt sind, verglichen, so daß eine sehr genaue Kartenposition des Fahrzeugs ermittelt werden kann. Weiterhin wird eine Positionsgüte berechnet und als Positionsgütesignal p an einem Ausgang zur Verfügung gestellt. Die Positionsgüte kann zum Beispiel aus der Differenz zwischen dem aktuellen Absolutpositionssignal und dem aktuellen Referenzpositionssignal, oder einer zeitlichen Mittelung oder Korrelation mehrerer dieser Signale ermittelt werden. Das Positionsgütesignal ist somit von den in der Ortungseinrichtung intern verwendeten Signalen und Daten unabhängig und kann als normiertes Signal für eine Vielzahl verschiedener Ortungseinrichtungen verwendet werden. Das Positionsgütesignal wird anschließend an die Ortungseinrichtung 1 weitergegeben und zu einer Abstimmung oder Korrektur des jeweiligen Algorithmus zur Bestimmung der Absolutposition verwendet werden.

Von der Navigationseinrichtung 3 wird weiterhin eine Relativposition bzw Map Matching-Position als Relativpositionssignal R zur Verfügung gestellt und in einer nachfolgenden Einrichtung durch Vergleich mit einem eingegebenen Zielort zur Berechnung einer Fahrtroute sowie einer nachfolgenden Ausgabe einer Fahrempfehlung verwendet.

Die Ortungseinrichtung 1 und die Navigationseinrichtung 3 können insbesondere auf getrennten integrierten Schaltungen ausgebildet werden. Dabei kann die Ortungseinrichtung auch in eine Empfangsantenne integriert werden, so daß eine derartige Empfangsantenne direkt an einen Datenbus des Fahrzeugs angeschlossen werden kann, um die jeweiligen Fahrzustandssignale aufzunehmen.

## Patentansprüche

1. Verfahren zur Bestimmung der Position eines Fahrzeugs, bei dem
- von einer Empfangsantenne (10) ausgegebene Positionssignale (x) und von Fahrzustandssensoren des Fahrzeugs ausgegebene Fahrzustandsgrößen (v, n, ω_{G}, b, ω̇_{G}, a) zur Ermittlung einer Absolutposition des Fahrzeugs verwendet werden und ein Absolutpositionssignal (A) von einer Ortungseinrichtung (1) ausgegeben wird, **dadurch gekennzeichnet, dass**
- aus dem Absolutpositionssignal (A) und vorgegebenen Referenzdaten eines Referenzsystems eine relative Position des Fahrzeugs in dem Referenzsystem ermittelt wird, ein Positionsgütesignal (p) aus einem Vergleich des Absolutpositionssignals und eines Referenzpositionssignals ermittelt wird, und
- das Positionsgütesignal (p) wiederum zur Kalibrierung der Ortungseinrichtung (1) zur Bestimmung der Absolutposition des Fahrzeugs verwendet wird.

2. Verfahren nach Anspruch 1, **dadurch gekennzeichnet, daß** das Absolutpositionssignal (A) aus mehreren zeitlich hintereinander folgenden Positionssignalen (x) und den Fahrzustandssignalen und einem Differenzkorrektursignal (DGNSS) ermittelt wird.

3. Verfahren nach Anspruch 1 oder 2, **dadurch gekennzeichnet, daß** als Fahrzustandssignale ein Fahrzeuggeschwindigkeitssignal (v) und/oder Raddrehzahlsignale (n) der Fahrzeugräder und/oder ein Längsbeschleunigungssignal (a) und/oder ein Querbeschleunigungssignal (b) und/oder eine Gierrate (ω_{G}) und/oder eine Gierwinkelbeschleunigung (ω̇_{G}) verwendet werden.

4. Vorrichtung zur Bestimmung der Position eines Fahrzeugs, insbesondere zum Durchführen eines Verfahrens nach einem der Ansprüche 1 bis 3, mit:
- einer Ortungseinrichtung (1) zur Bestimmung einer Absolutposition des Fahrzeugs, die Fahrzustandsgrößen (v, a, n, b, ω_{G}, ω̇_{G}) des Fahrzeugs von Fahrzeugsensoren (5, 6, 7, 8, 9) und Positionssignale (x) von einer Empfangsantenne (10) aufnimmt, eine Absolutposition des Fahrzeugs bestimmt und als Absolutpositionssignal (A) zur Verfügung stellt, und
- einer Navigationseinrichtung (3), die das Absolutpositionssignal (A) und zumindest einige der Fahrzustandssignale von der Ortungseinrichtung (1) aufnimmt und ein Relativpositionssignal (R) zur Festlegung der Fahrzeugposition in einem Referenzsystem bestimmt,
**dadurch gekennzeichnet, dass** Navigationseinrichtung (3) ein Positionsgütesignal (p) aus einer Abweichung oder Streuung des Absolutpositionssignals (A) von dem Relativpositionssignal (R) ermittelt und der Ortungseinrichtung (1) für eine anschließende, erneute Bestimmung einer Absolutposition zur Verfügung stellt, wobei die Absolutposition durch Einbeziehung des Positionsgütesignals (p) korrigierbar ist.

5. Vorrichtung nach Anspruch 4, **dadurch gekennzeichnet, daß** das Positionsgütesignal (p) aus einer Korrelation mehrerer zeitlich aufeinanderfolgender Absolutpositionssignale (A) ermittelt wird.

6. Vorrichtung nach Anspruch 4 oder 5, **dadurch gekennzeichnet, daß** in der Ortungseinrichtung (1) zumindest einige Sensorsignale durch mehrere zeitlich aufeinanderfolgende Positionssignale (x) kalibrierbar sind.

7. Vorrichtung nach einem der Ansprüche 4 bis 6, **dadurch gekennzeichnet, daß** die Ortungseinrichtung (1) Differenz-Korrekturdaten (DGNSS) empfängt und zur Ermittlung der Absolutpositionssignale (A) verwendet.

8. Vorrichtung nach einem der Ansprüche 4 bis 7, **dadurch gekennzeichnet, daß** die Ortungseinrichtung (1) ein Geschwindigkeitssignal (v) und/oder ein Fahrtrichtungssignal (f) und/oder ein Wegintegralsignal (w) und/oder ein Uhrzeitsignal (t) an die Navigationseinrichtung weitergibt.

9. Vorrichtung nach einem der Ansprüche 4 bis 8, **dadurch gekennzeichnet, daß** die Ortungseinrichtung (1) ein Qualitätssignal (q) zur Beurteilung der Genauigkeit der Absolutposition ermittelt und der Navigationseinrichtung zur Verfügung stellt und die Navigationseinrichtung (3) das Qualitätssignal zu der Bestimmung des Positionsgütesignals (p) heranzieht.

10. Vorrichtung nach einem der Ansprüche 4 bis 9, **dadurch gekennzeichnet, daß** die Ortungseinrichtung (1) und die Navigationseinrichtung (3) über eine Schnittstelle miteinander verbunden sind.

11. Vorrichtung nach einem der Ansprüche 4 bis 10, **dadurch gekennzeichnet, daß** die Ortungseinrichtung (1) und die Navigationseinrichtung (3) auf getrennten integrierten Schaltungen ausgebildet sind.

12. Vorrichtung nach einem der Ansprüche 4 bis 11, **dadurch gekennzeichnet, daß** die Ortungseinrichtung in einer Empfangsantenne angeordnet ist.

## Claims

1. Method for determining the position of a vehicle, in which
- position signals (x) which are output by a reception antenna (10) and driving state variables (v, n, ω_{G}, b, ω̇_{G}, a) which are output by vehicle state sensors of the vehicle are used to determine an absolute position of the vehicle, and an absolute position signal (A) is output by a locating device (1), **characterized in that**
- a relative position of the vehicle is determined in the reference system from the absolute position signal (A) and predetermined reference data of a reference system, a position quality signal (p) is determined from a comparison of the absolute position signal and of a reference position signal, and
- the position quality signal (p) is in turn used to standardize the locating device (1) in order to determine the absolute position of the vehicle.

2. Method according to Claim 1, **characterized in that** the absolute position signal (A) is determined from a plurality of chronologically successive position signals (x) and the driving state signals and a difference correction signal (DGNSS).

3. Method according to Claim 1 or 2, **characterized in that** a vehicle speed signal (v) and/or wheel speed signals (n) of the vehicle wheels and/or a longitudinal acceleration signal (a) and/or a transverse acceleration signal (b) and/or a yaw rate (ω_{G}) and/or a yaw angle acceleration (ω̇_{G}) are used as driving state signals.

4. Device for determining the position of a vehicle, in particular for carrying out a method according to one of Claims 1 to 3, having:
- a locating device (1) for determining an absolute position of the vehicle, which picks up driving state variables (v, a, n, b, ω_{G}, ω̇_{G}) of the vehicle from vehicle sensors (5, 6, 7, 8, 9) and position signals (x) from a reception antenna (10), determines an absolute position of the vehicle and makes it available as an absolute position signal (A), and
- a navigation device (3) which takes the absolute position signal (A) and at least some of the driving state signals from the locating device (1) and determines a relative position signal (R) for determining the position of the vehicle in a reference system,
**characterized in that** the navigation device (3) determines a position quality signal (p) from a deviation or variance of the absolute position signal (A) from the relative position signal (R), and makes it available to'the locating device (1) for a subsequent, renewed determination of an absolute position, the absolute position being capable of being corrected by including the position quality signal (p).

5. Device according to Claim 4, **characterized in that** the position quality signal (p) is determined from a correlation between a plurality of chronologically successive absolute position signals (A).

6. Device according to Claim 4 or 5, **characterized in that** at least a number of sensor signals can be standardized in the locating device (1) by means of a plurality of chronologically successive position signals (x).

7. Device according to one of Claims 4 to 6, **characterized in that** the locating device (1) receives difference correction data (DGNSS) and uses it to determine the absolute position signals (A).

8. Device according to one of Claims 4 to 7, **characterized in that** the locating device (1) passes on a speed signal (v) and/or a direction of travel signal (f) and/or a distance integral signal (w) and/or a time signal (t) to the navigation device.

9. Device according to one of Claims 4 to 8, **characterized in that** the locating device (1) determines a quality signal (q) for assessing the precision of the absolute position, and makes it available to the navigation device and the navigation device (3) uses the quality signal to determine the position quality signal (p).

10. Device according to one of Claims 4 to 9, **characterized in that** the locating device (1) and the navigation device (3) are connected to one another via an interface.

11. Device according to one of Claims 4 to 10, **characterized in that** the locating device (1) and the navigation device (3) are formed on separate integrated circuits.

12. Device according to one of Claims 4 to 11, **characterized in that** the locating device is arranged in a reception antenna.

## Revendications

1. Procédé pour déterminer la position d'un véhicule automobile dans lequel:
- des signaux de position (x) délivrés par une antenne de réception (10) et des grandeurs d'état de circulation (v, n, ωG, b, ω̇G, a) délivrées par des détecteurs d'état de circulation du véhicule automobile sont utilisés pour la détermination d'une position absolue du véhicule automobile et un signal de position absolue (A) est délivré par un dispositif de repérage (1),
**caractérisé en ce qu'**
- à partir du signal de position absolue (A) et des données de référence prédéterminées d'un système de référence, une position relative du véhicule automobile est déterminée dans le système de référence, un signal de justesse de position (p) est déterminé à partir d'une différence entre le signal de position absolue et un signal de position de référence, et
- le signal de justesse de position (p) est, à son tour, utilisé pour le calibrage du dispositif de repérage (1) pour déterminer la position absolue du véhicule automobile.

2. Procédé selon la revendication 1,
**caractérisé en ce que**
le signal de position absolue (A) est déterminé à partir de plusieurs signaux de position (x) se succédant dans le temps et des signaux d'état de circulation et d'un signal de correction de différentiel (DGNSS).

3. Procédé selon la revendication 1 ou 2,
**caractérisé en ce que**
comme signaux d'état de circulation, sont utilisés un signal de vitesse de véhicule automobile (v) et/ou un signal de vitesse de rotation de roue (n) des roues du véhicule automobile et/ou un signal d'accélération longitudinale (a) et/ou un signal d'accélération latérale (b) et/ou une vitesse de lacet (ω_{G}) et/ou une accélération d'angle de lacet (ω̇G).

4. Dispositif pour déterminer la position d'un véhicule automobile, notamment pour appliquer un procédé selon l'une quelconque des revendications 1 à 3, comportant :
- un dispositif de repérage (1) pour la détermination d'une position absolue du véhicule automobile, qui reprend les grandeurs d'état de circulation (v, a, n, b, ωG, ω̇G) du véhicule automobile des détecteurs du véhicule automobile (5, 6, 7, 8, 9) et les signaux de position (x) d'une antenne de réception (10), détermine une position absolue du véhicule automobile et la met à disposition en tant que signal de position absolue (A) et
- un dispositif de navigation (3) qui reprend le signal de position absolue (A) et au moins certains des signaux d'état de circulation du dispositif de repérage (1) et détermine un signal de position relative (R) pour la définition de la position du véhicule automobile dans un système de référence,
**caractérisé en ce que**
le dispositif de navigation (3) détermine un signal de justesse de position (p) à partir d'un écart ou d'une dispersion du signal de position absolue (A) par rapport au signal de position relative (R) et le met à la disposition du dispositif de repérage (1), pour une nouvelle détermination à suivre d'une position absolue, la position absolue pouvant être corrigée en tenant compte du signal de justesse de position (p).

5. Dispositif selon la revendication 4,
**caractérisé en ce que**
le signal de justesse de position (p) est déterminé à partir d'une corrélation entre plusieurs signaux de position absolue (A) se succédant dans le temps.

6. Dispositif selon la revendication 4 ou 5,
**caractérisé en ce que**
dans le dispositif de repérage (1), au moins quelques signaux de capteur peuvent être calibrés par plusieurs signaux de position (x) se succédant dans le temps.

7. Dispositif selon l'une quelconque des revendications 4 à 6,
**caractérisé en ce que**
le dispositif de repérage (1) reçoit des données de correction différentielles (DGNSS) et les utilise pour déterminer les signaux de position absolue (A).

8. Dispositif selon l'une quelconque des revendications 4 à 7,
**caractérisé en ce que**
le dispositif de repérage (1) retransmet un signal de vitesse de véhicule automobile (v) et/ou un signal de direction de circulation (f) et/ou un signal d'intégrale de trajet (w) et/ou un signal horaire (t) au dispositif de navigation.

9. Dispositif selon l'une quelconque des revendications 4 à 8,
**caractérisé en ce que**
le dispositif de repérage (1) détermine un signal de qualité (q) pour juger la précision de la position absolue et le met à la disposition du dispositif de navigation, et le dispositif de navigation (3) s'appuie sur le signal de qualité (q) pour déterminer le signal de justesse de position (p).

10. Dispositif selon l'une quelconque des revendications 4 à 9,
**caractérisé en ce que**
le dispositif de repérage (1) et le dispositif de navigation (3) sont reliés ensemble au travers d'une interface.

11. Dispositif selon l'une quelconque des revendications 4 à 10,
**caractérisé en ce que**
le dispositif de repérage (1) et le dispositif de navigation (3) sont réalisés dans des circuits intégrés séparés.

12. Dispositif selon l'une quelconque des revendications 4 à 11,
**caractérisé en ce que**
le dispositif de repérage est disposé dans une antenne de réception.
